(19) Europäisches Patentamt
European Patent Office
Office européen des brevets

(11) **EP 3 202 833 B1**

(12) **EUROPEAN PATENT SPECIFICATION**

(45) Date of publication and mention
of the grant of the patent:
**01.01.2020 Bulletin 2020/01**

(51) Int Cl.:
***C08J 9/12*** *(2006.01)*          ***C08J 9/18*** *(2006.01)*
***C08J 9/232*** *(2006.01)*

(21) Application number: **15847052.6**

(22) Date of filing: **09.09.2015**

(86) International application number:
**PCT/JP2015/075601**

(87) International publication number:
**WO 2016/052112 (07.04.2016 Gazette 2016/14)**

(54) **EXPANDED ARTICLE**

EXPANDIERTER ARTIKEL

ARTICLE EXPANSÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.09.2014 JP 2014201129**

(43) Date of publication of application:
**09.08.2017 Bulletin 2017/32**

(73) Proprietor: **Sekisui Plastics Co., Ltd.
Osaka-shi,
Osaka 530-0047 (JP)**

(72) Inventors:
• **AKUTA, Ryo
Tenri-shi
Nara 632-0007 (JP)**
• **TAKANO, Masayuki
Tenri-shi
Nara 632-0007 (JP)**

• **FUKUZAKI, Yuta
Tenri-shi
Nara 632-0007 (JP)**

(74) Representative: **Hoffmann Eitle
Patent- und Rechtsanwälte PartmbB
Arabellastraße 30
81925 München (DE)**

(56) References cited:
**EP-A1- 1 486 531       EP-A1- 1 925 635
JP-A- 2007 291 337       JP-A- 2010 084 508
JP-A- 2012 229 416       JP-A- 2013 082 881**

• **SPECIALTY ELASTOMER DIVISION BUSINESS
PLANNING DEPT./POLYMER RESEARCH
LABORATORIES: 'Specialty Olefinic
Thermoplastic Elastomer -JSR EXCELINK' J SR
TECHNICAL REVIEW no. 109, 2002, pages 30 - 34,
XP055425120**

**Description**

TECHNICAL FIELD

The present invention relates to an expanded article, and expanded particles used to produce same (an expanded molded article and expanded particles used in manufacturing the same). More particularly, the present invention relates to an expanded molded article excellent in flexibility and recoverability, and expanded particles including an olefin-based elastomer used in manufacturing the same. Since the expanded molded article of the present invention is excellent in flexibility and recoverability, it can be used as a seat sheet core material for railway vehicles, aircrafts, and automobiles, a bed, a cushion or the like.

BACKGROUND TECHNOLOGY

Conventionally, a polystyrene expanded molded article has been used widely as a buffer material or a packaging material. Herein, the expanded molded article can be obtained by heating and expanding (pre-expanding) expandable particles such as expandable polystyrene particles to obtain expanded particles (pre-expanded particles), filling the resultant expanded particles into a cavity of a mold, and thereafter, secondarily expanding them to mutually integrate the expanded particles by thermal fusion.

It is known that the polystyrene expanded molded article has high rigidity, but low recoverability and resilience, since a monomer as a raw material is styrene. For this reason, there was a problem that it was difficult to use the polystyrene expanded molded article in use in which it is repeatedly compressed, and in use in which flexibility is required.

In order to solve the above-described problem, in Japanese Unexamined Patent Application, First Publication No. 2011-132356 (Patent Document 1), there has been proposed an expanded molded article using expanded particles including an olefin-based resin, a thermoplastic elastomer, and a mineral oil. Additionally, in Japanese Unexamined Patent Application, First Publication No. 2000-344924 (Patent Document 2), there has been proposed an expanded molded article using expanded particles consisting of a crosslinked olefin-based elastomer. It is stated that these expanded molded articles are excellent in flexibility.

PRIOR ART DOCUMENTS

Patent Documents

Patent Document 1: Japanese Unexamined Patent Application, First Publication No. 2011-132356
Patent Document 2: Japanese Unexamined Patent Application, First Publication No. 2000-344924
Patent Document 3: EP 1 925 635 A1
Patent Document 4: EP 1 486 531 A1

SUMMARY OF THE INVENTION

PROBLEM TO BE SOLVED BY THE INVENTION

The mineral oil contained in the expanded particles of Patent Document 1 is used for improving flexibility of the expanded molded article. Since containing the mineral oil aggregates expanded particles, there was however a problem that moldability is deteriorated. On the other hand, the expanded particles of Patent Document 2 are also crosslinked at a surface thereof. For this reason, since moldability is deteriorated due to elongation of a surface at molding and deficiency in fusion between particles, there was a problem that flexibility of the expanded molded article is insufficient, and recoverability is also inferior Both Patent Document 3 and 4 disclose expanded molded articles comprising a fused body of expanded particles comprising a non-crosslinked olefin-based elastomer and further components.

MEANS FOR SOLVING THE PROBLEM

The inventors of the present invention have studied an expanded molded article which is excellent in flexibility and recoverability, and is good in molding, without containing a mineral oil, and found out that just by using a non-crosslinked resin in an olefin-based elastomer as a base resin, and adjusting the compression set and bulk density of the expanded molded article in specified ranges, it is possible to provide an expanded molded article having the above-described desired physical properties, resulting in completion of the present invention.

Thus, according to the present invention, there is provided an expanded molded article comprising a fused body of expanded particles consisting of a non-crosslinked olefin-based elastomer and not including a mineral oil, the expanded molded article having a density of 0.015 to 0.5 g/cm$^3$ and a compression set of 25% or less; wherein said non-crosslinked olefin-based elastomer is an elastomer in which an absorption ratio (A2920 cm$^{-1}$/A1376 cm$^{-1}$) of a maximum peak in a range of 2920 $\pm$ 20 cm$^{-1}$ (A2920 cm$^{-1}$) and a maximum peak in a range of 1376 $\pm$ 20 cm$^{-1}$ (A1376 cm$^{-1}$), obtained in FT-IR measurement, is in a range of 1.20 to 10.

Also, according to the present invention, there are provided expanded particles for use in manufacturing the above-described expanded molded article.

EFFECTS OF INVENTION

According to the olefin-based elastomer expanded particles of the present invention, there can be provided expanded particles which can afford an expanded molded article excellent in flexibility and recoverability at good moldability.

Additionally, when the non-crosslinked olefin-based elastomer is an elastomer in which an absorbance ratio (A2920 cm$^{-1}$/A1376 cm$^{-1}$) of a maximum peak in a range of 2920 $\pm$ 20 cm$^{-1}$ (A2920 cm$^{-1}$) and a maximum peak in a range of 1376 $\pm$ 20 cm$^{-1}$ (A1376 cm$^{-1}$), obtained in FT-IR measurement, is in a range of 1.20 to 10, there can be provided an expanded molded article which is more excellent in flexibility and recoverability, and is better in molding.

Furthermore, when the expanded molded article has a surface hardness (C) of 5 to 70, there can be provided an expanded molded article which is more excellent in flexibility and recoverability, and is better in molding.

Additionally, when the expanded particles have an average particle diameter of 1.0 to 15 mm, there can be provided expanded particles which can afford an expanded molded article more excellent in flexibility and recoverability.

BRIEF DESCRIPTION OF THE DRAWINGS

Fig. 1 is a Fourier transformation infrared spectroscopy (FT-IR) chart of an elastomer of TPO series.
Fig. 2 is a Fourier transformation infrared spectroscopy (FT-IR) chart of an elastomer of TPO series.
Fig. 3 is a Fourier transformation infrared spectroscopy (FT-IR) chart of an elastomer of TPO series.
Fig. 4 is a Fourier transformation infrared spectroscopy (FT-IR) chart of an elastomer of TPO series.
Fig. 5 is a Fourier transformation infrared spectroscopy (FT-IR) chart of E200GP.
Fig. 6 is a Fourier transformation infrared spectroscopy (FT-IR) chart of Novatec LC600A.

BEST MODE FOR CARRYING OUT THE INVENTION

(Expanded Molded Article)

An expanded molded article is composed of a fused body of expanded particles including a non-crosslinked olefin-based elastomer and not including a mineral oil.

Expanded particles constituting the fused body (hereinafter, also referred to as fused expanded particles) consist of a non-crosslinked olefin-based elastomer as a base resin. In the present specification, the non-crosslinked means that a fraction of a gel which is insoluble in a dissolvable organic solvent such as xylene is 3.0% by mass or less. A gel fraction is a value obtained by measurement as follows.

A mass W1 of resin particles of the non-crosslinked olefin-based elastomer is measured. Then, the resin particles of the non-crosslinked olefin-based elastomer are heated to reflux in 80 milliliters of boiling xylene for 3 hours. Then, the residue in xylene is filtered using a 80 mesh metal net, the residue remaining on the metal net is dried at 130°C over 1 hour, a mass W2 of the residue remaining on the metal net is measured, and a gel fraction of the resin particles of the non-crosslinked olefin-based elastomer can be calculated based on the following equation.

$$\text{Gel fraction (\% by mass)} = 100 \times \text{W2/W1}$$

Additionally, the fused expanded particles do not include a mineral oil of an aromatic ring, a naphthene ring, a paraffin chain or the like. By not including the mineral oil, deteriorated welding between expanded particles at molding can be suppressed.

The expanded molded article has a density of 0.015 to 0.5 g/cm$^3$. In this range, flexibility and recoverability can be made compatible at the good balance. The density may be 0.03 to 0.2 g/cm$^3$. The density can take 0.015 g/cm$^3$, 0.02 g/cm$^3$, 0.03 g/cm$^3$, 0.04 g/cm$^3$, 0.05 g/cm$^3$, 0.1 g/cm$^3$, 0.15 g/cm$^3$, 0.2 g/cm$^3$, 0.3 g/cm$^3$, 0.4 g/cm$^3$, and 0.5 g/cm$^3$.

Additionally, the expanded molded article has a compression set of 25% or less. In this range, flexibility and recoverability can be made compatible at the good balance. The compression set may be 6% or less. The compression set can take 0%, 1%, 2%, 3%, 4%, 5%, 6%, 7%, 8%, 9%, 10%, 15%, 20%, and 25%.

Furthermore, it is preferable that the expanded molded article has a surface hardness (C) of 5 to 70. In this range, flexibility and recoverability can be made compatible at the good balance. The surface hardness (C) may be 10 to 35. The surface hardness (C) can take 5, 10, 15, 20, 25, 30, 35, 40, 45, 50, 55, 60, 65, and 70.

(1) Non-Crosslinked Olefin-Based Elastomer

The non-crosslinked olefin-based elastomer is not particularly limited, as long as it can impart the predetermined density and compression set to the expanded molded article in the absence of a mineral oil. Examples of the non-crosslinked olefin-based elastomer include ones having a structure in which a hard segment and a soft segment are combined. Such a structure imparts, to the elastomer, a nature that the elastomer exhibits rubber elasticity at an ambient temperature, and is plasticized to become moldable at a high temperature.

An example thereof includes a non-crosslinked olefin-based elastomer in which a hard segment is a polypropylene-based resin and a soft segment is a polyethylene-based resin.

As the former polypropylene-based resin, a resin containing polypropylene as a main component can be used. Polypropylene may have stereoregularity selected from isotactic, syndiotactic, atactic, and the like.

As the latter polyethylene-based resin, a resin containing polyethylene as a main component can be used. Examples of a component other than polyethylene include polyolefins such as polypropylene and polybutene.

Examples of the non-crosslinked olefin-based elastomer include a polymerization-type elastomer which is directly manufactured in a polymerization reaction container by performing polymerization of a monomer which is to be a hard segment and a monomer which is to be a soft segment; a blend-type elastomer which is manufactured by physically dispersing a polypropylene-based resin which is to be a hard segment and a polyethylene-based resin which is to be a soft segment, using a kneading machine such as a Banbury mixer and a twin screw extruder.

In addition, the non-crosslinked olefin-based elastomer also exerts the effect of being capable of improving recyclability of a manufactured expanded molded article. Additionally, the elastomer is easily manufactured with the same expanding machine as that of the case where an ordinary polyolefin-based resin is expansion-molded. Accordingly, even when the expanded molded article is recycled and supplied again to an expanding machine to perform expansion molding, deteriorated expansion due to generation of a rubber component can be suppressed.

As the non-crosslinked olefin-based elastomer, an elastomer is used in which an absorbance ratio (A2920 cm$^{-1}$/A1376 cm$^{-1}$) of a maximum peak in a range of 2920 $\pm$ 20 cm$^{-1}$ (A2920 cm$^{-1}$) and a maximum peak in a range of 1376 $\pm$ 20 cm$^{-1}$ (A1376 cm$^{-1}$), obtained in Fourier transformation infrared spectroscopy (FT-IR) measurement, is in a range of 1.20 to 10. When the absorbance ratio is less than 1.20, the hardness of the expanded molded article becomes high, and may cause deterioration in flexibility. When the absorbance ratio is greater than 10, it becomes difficult to retain the shape at expansion, and contraction may be caused. The more preferable absorbance ratio is 0.20 to 5. The absorbance ratio can take 1.2, 1.5, 2.0, 2.5, 3.0, 3.5, 4.0, 4.5, 5.0, 5.5, 6.0, 6.5, 7.0, 7.5, 8.0, 8.5, 9.0, 9.5, and 10.0.

Additionally, as the non-crosslinked olefin-based elastomer, an elastomer can be suitably used in which an absorbance ratio (A720 cm$^{-1}$/A1376 cm$^{-1}$) of a maximum peak in a range of 1376 $\pm$ 20 cm$^{-1}$ (A1376 cm$^{-1}$) and a maximum peak in a range of 720 $\pm$ 20 cm$^{-1}$ (A720 cm$^{-1}$), obtained in FT-IR measurement, is in a range of 0.02 to 0.5. When the absorbance ratio is less than 0.02, the hardness of the expanded molded article becomes high, and deterioration in flexibility may be caused. When the absorbance ratio is greater than 0.5, it becomes difficult to retain the shape at expansion, and contraction may be caused. The more preferable absorbance ratio is 0.05 to 0.4. The absorbance ratio can take 0.02, 0.05, 0.1, 0.14, 0.18, 0.22, 0.26, 0.3, 0.34, 0.38, 0.4, 0.44, 0.48, and 0.5.

In addition, the absorbance A2920 cm$^{-1}$ at 2920 cm$^{-1}$ obtained from an infrared absorption spectrum means the absorbance corresponding to an absorption spectrum derived from C-H stretching vibration of a methylene group contained in a polymethylene chain in an olefin-based elastomer, and the absorbance A1376 cm$^{-1}$ at 1376 cm$^{-1}$ means the absorbance corresponding to an absorption spectrum derived from C-H$_3$ symmetric bending vibration of a -C-CH$_3$ moiety contained in an olefin-based elastomer, respectively. Accordingly, when this absorbance ratio is measured, constituent components of a hard segment and a soft segment in the non-crosslinked olefin-based elastomer and the ratio thereof can be approximately presumed. Additionally, the absorbance A720 cm$^{-1}$ at 720 cm$^{-1}$ is the absorbance corresponding to an absorption spectrum derived from skeleton vibration of a polymethylene chain in an olefin-based elastomer. By measuring the absorbance ratio between the above-described maximum peak in the range of 2920 $\pm$ 20 cm$^{-1}$, constituent components of a hard segment and a soft segment in the non-crosslinked olefin-based elastomer and the ratio thereof can also be approximately presumed.

The non-crosslinked olefin-based elastomer has a Shore A hardness of preferably 30 to 100, and more preferably 40 to 90. The Shore A hardness may be 50 to 100 or 60 to 90. The Shore A hardness can take 30, 40, 50, 60, 70, 80, 90, and 100. The hardness of the non-crosslinked polyolefin-based elastomer is measured in accordance with a durometer hardness test (JIS K6253:97).

Additionally, the non-crosslinked olefin-based elastomer has a Shore D hardness of preferably 10 to 70, and more preferably 20 to 60. The Shore D hardness can take 10, 20, 30, 40, 50, 60, and 70. The hardness of the non-crosslinked polyolefin-based elastomer is measured in accordance with a durometer hardness test (ASTM D2240: 95).

The non-crosslinked polyolefin-based elastomer has a melting point of preferably 80 to 180°C, and more preferably 90 to 170°C. A melting point can take 80°C, 100°C, 120°C, 140°C, 160°C, and 180°C.

A shape of the base resin is not particularly limited, but examples thereof include a truly spherical shape, an elliptically spherical shape (oval shape), a columnar shape, a prismatic shape, a pellet-like shape, a granular shape, and the like.

It is preferable that the base resin has an average particle diameter of 0.5 to 8.0 mm. When the average particle diameter is less than 0.5 mm, since gas holdability of the base resin is low, expansion may be difficult. When the average particle diameter is greater than 8.0 mm, since heat is not transmitted to the interior when expanded, a dense core may be generated in fused expanded particles. A more preferable average particle diameter is 1.0 to 6.0 mm.

(GPC)

A GPC chart of the above-described elastomer of TPO series shows a single peak. It can be presumed that this suggests that the elastomer of TPO series is not a mixture of a plurality of polymers, but substantially consists of a single polymer.

In addition, from the GPC chart, various average molecular weights are obtained. R110E has a number average molecular weight $Mn$ of about 140,000 and a weight average molecular weight $Mw$ of about 4,500,000, R110MP has $Mn$ of about 130,000 and $Mw$ of about 380,000, T310E has $Mn$ of about 130,000 and $Mw$ of about 440,000, and M142E has $Mn$ of about 90,000 and $Mw$ of about 300,000.

(2) Method for Manufacturing Expanded Molded Article

An expanded molded article is obtained by in-die molding expanded particles, and is composed of a fused body of a plurality of expanded particles. For example, the expanded molded article can be obtained, for example, by filling the expanded particles into a closed mold having a number of small pores, heating and expanding the expanded particles with the pressurized water steam to fill gaps between the expanded particles, and at the same time, mutually fusing the expanded particles to integrate them. Thereupon, the density of the expanded molded article can be adjusted by, for example, adjusting an amount of the expanded particles to be filled into a mold, or the like.

Furthermore, an inert gas may be impregnated into the expanded particles to improve expanding power of the expanded particles. By improving expanding power, fusibility between the expanded particles is improved at in-die molding, and the expanded molded article has the further excellent mechanical strength. In addition, examples of the inert gas include carbon dioxide, nitrogen, helium, argon, and the like.

As an example of a method of impregnating the inert gas into the expanded particles, a method of impregnating the inert gas into the expanded particles by placing the expanded particles under an inert gas atmosphere having a pressure of an ambient pressure or higher can be mentioned. The expanded particles may be impregnated with the inert gas before filling into a mold, or may be impregnated with the inert gas by placing the expanded particles together with a mold under the inert gas atmosphere after filling them into the mold. In addition, when the inert gas is nitrogen, it is preferable that expanded particles are allowed to stand in a nitrogen atmosphere at 0.1 to 2.0 MPa over 20 minutes to 24 hours.

When the expanded particles have been impregnated with the inert gas, the expanded particles may be heated and expanded as they are in a mold, or the expanded particles are heated and expanded before filling them into a mold to obtain expanded particles of the high expansion ratio, and thereafter, the particles may be filled into a mold, and heated and expanded. By using such expanded particles of the high expansion ratio, the expanded molded article of the high expansion ratio can be obtained.

Additionally, when a coalescence preventing agent is used at manufacturing of the expanded particles, molding may be performed while the coalescence preventing agent is attached to the expanded particles at manufacturing of the expanded molded article. Additionally, in order to promote mutual fusion between the expanded particles, the coalescence preventing agent may be washed to remove before a molding step, or stearic acid as a fusion promoting agent may be added at molding, with or without removal of the coalescence preventing agent. Herein, it is preferable that the coalescence preventing agent has been removed in advance, from a view point that fusion of the expanded particles at molding is promoted.

(3) Intended Use of Expanded Molded Article

The expanded molded article can be used, for example, in a seat sheet core material for railway vehicles, aircrafts, and automobiles, a bed, a cushion or the like.

(Expanded Particles)

Expanded particles are not particularly limited, as long as they can be used for manufacturing the above-described expanded molded article. As the expanded particles, expanded particles including a non-crosslinked olefin-based elastomer and not including a mineral oil can be used.

(1) Shape and the like of Expanded Particles

The expanded particles have a bulk density in a range of 0.015 to 0.5 g/cm$^3$. When the bulk density is less than 0.015 g/cm$^3$, since contraction is generated in the resulting expanded molded article, appearance may not become good, and the mechanical strength of the expanded molded article may be reduced. When the bulk density is greater than 0.5 g/cm$^3$, lightweight property of the expanded molded article may be deteriorated. The preferable bulk density is 0.02 to 0.45 g/cm$^3$, and the further preferable bulk density is 0.013 to 0.40 g/cm$^3$. The bulk density may be 0.03 to 0.2 g/cm$^3$.

A shape of the expanded particles is not particularly limited, but examples thereof include a truly spherical shape, an elliptically spherical shape (oval shape), a columnar shape, a prismatic shape, a pellet-like shape, a granular shape, and the like.

It is preferable that expanded particles have an average particle diameter of 1.0 to 15 mm. When the average particle diameter is less than 1.0 mm, manufacturing of the expanded particles itself is difficult, and the manufacturing cost may be increased. When the average particle diameter is greater than 15 mm, upon preparation of the expanded molded article by in-die molding, mold-filling property may be deteriorated.

The expanded particles can be used as they are in a filler for a cushion, or can be used as a raw material for the expanded molded article for in-die expansion. When used as a raw material for the expanded molded article, usually, the expanded particles are called "pre-expanded particles", and expansion for obtaining them is called "pre-expansion".

(2) Method for Manufacturing Expanded Particles

The expanded particles can be obtained by being subjected to a step of impregnating a blowing agent into resin particles containing a non-crosslinked olefin-based elastomer to obtain expandable particles (impregnation step) and a step of expanding the expanded particles (expansion step).

(a) Impregnation Step

Resin particles can be obtained using the known manufacturing methods and manufacturing facilities.

For example, the resin particles can be manufactured by melt-kneading a non-crosslinked olefin-based elastomer resin using an extruder, and then, performing granulation by extrusion, underwater cutting, strand cutting or the like. The temperature, the time, the pressure and the like at melt-kneading can be appropriately set in conformity with raw materials to be used and manufacturing facilities.

A melt-kneading temperature in an extruder at melt-kneading is preferably 170 to 250°C, which is a temperature at which the non-crosslinked olefin-based elastomer is sufficiently softened, and more preferably 200 to 230°C. A melt-kneading temperature means a temperature of a melt-kneaded product in an extruder, obtained by measuring a temperature of a central part of a melt-kneaded product flow channel near an extruder head with a thermocouple-type thermometer.

A shape of the resin particles is, for example, a truly spherical shape, an elliptically spherical shape (oval shape), a columnar shape, a prismatic shape, a pellet-like shape or a granular shape.

It is preferable that resin particles have an average particle diameter of 0.5 to 6 mm. When the average particle diameter is smaller than 0.5 mm, dissipation of the impregnated blowing agent becomes faster, and it may become difficult to perform expansion up to the desired density. When the average particle diameter is greater than 6 mm, heat is not uniformly transmitted to a central part of the particles at expansion, and the particles may become expanded particles having a dense core.

(b) Expandable Particles

Resin particles are impregnated with a blowing agent to manufacture expandable particles. In addition, as a method of impregnating the blowing agent into the resin particles, the known methods can be used. An example thereof includes a method of supplying resin particles, a dispersant, and water into an autoclave, stirring them, thereby, dispersing the resin particles in water to produce a dispersion, feeding a blowing agent under pressure into this dispersion to impregnate the blowing agent into the resin particles.

The dispersing agent is not particularly limited, but examples thereof include hardly water-soluble inorganic substances such as calcium phosphate, magnesium pyrophosphate, sodium pyrophosphate, and magnesium oxide, and surfactants such as sodium dodecylbenzenesulfonate.

As the blowing agent, general-purpose blowing agents are used, and examples thereof include inorganic gases such as air, nitrogen, and carbon dioxide (carbonic acid gas); aliphatic hydrocarbons such as propane, butane, and pentane; and halogenated hydrocarbons, and inorganic gases are preferable. In addition, the blowing agent may be used alone, or two or more kinds thereof may be used concurrently.

An amount of the blowing agent to be impregnated into the resin particles is preferably 1.5 to 6.0 parts by mass based on 100 parts by mass of the resin particles. When the amount is less than 1.5 parts by mass, expanding power becomes low, and it is difficult to perform good expansion, at the high expansion ratio. When the content of the blowing agent exceeds 6.0 parts by mass, breakage of a cell membrane becomes to be easily generated, the plasticizing effect becomes too great, the viscosity at expansion becomes to be easily reduced, and contraction becomes easy to occur. A more preferable amount of the blowing agent is 2.0 to 5.0 parts by mass. Within this range, expanding power can be sufficiently enhanced, and even at the high expansion ratio, the particles can be expanded much more favorably.

The content (impregnated amount) of the blowing agent which has been impregnated into 100 parts by mass of the resin particles is measured as follows.

A mass Xg before placement of the resin particles into a pressure container is measured. In the pressure container, after the blowing agent is impregnated into the resin particles, a mass Yg after takeout of an impregnation product from the pressure container is measured. By the following equation, the content (impregnated amount) of the blowing agent which has been impregnated into 100 parts by mass of the resin particles is obtained.

$$\text{Content of blowing agent (parts by mass)} = ((Y\text{-}X)/X) \times 100$$

When the temperature for impregnating the blowing agent into the resin particles is low, the time necessary for impregnating the blowing agent into the resin particles becomes long, and production efficiency may be reduced. On the other hand, when the temperature is high, the resin particles may be mutually fused to generate bonded particles. The temperature for impregnation is preferably -20 to 120°C, and more preferably -15 to 110°C. A blowing auxiliary agent (plasticizer) may be used together with the blowing agent. Examples of the blowing auxiliary agent (plasticizer) include diisobutyl adipate, toluene, cyclohexane, ethylbenzene, and the like.

(c) Expansion Step

In an expansion step, an expansion temperature and a heating medium are not particularly limited, as long as expandable particles can be expanded to obtain expanded particles.

It is preferable that, in an expansion step, an inorganic component is added to the expandable particles. Examples of the inorganic component include particles of an inorganic compound such as calcium carbonate and aluminum hydroxide. An addition amount of the inorganic component is preferably 0.03 part by mass or more, more preferably 0.05 part by mass or more, preferably 0.2 part by mass or less, and more preferably 0.1 part by mass or less, based on 100 parts by mass of the expandable particles.

When expansion is performed under the high pressure steam, if an organic coalescence preventing agent is used, the particles are melted at expansion, and it is difficult to obtain the sufficient effect. On the other hand, an inorganic coalescence preventing agent such as calcium carbonate has the sufficient coalescence preventing effect even under high pressure steam heating.

A particle diameter of the inorganic component is preferably 5 $\mu$m or less. A minimum value of a particle diameter of the inorganic component is around 0.01 $\mu$m. When a particle diameter of the inorganic component is not greater than an upper limit, an addition amount of the inorganic component can be reduced, and the inorganic component becomes to hardly give adverse influence (inhibition) to a later molding step.

In addition, before expansion, powdery metal soaps such as zinc stearate; calcium carbonate; and aluminum hydroxide may be coated on a surface of the resin particles. By this coating, mutual binding between the resin particles at the expansion step can be decreased. Alternatively, a surface treating agent such as an antistatic agent and a spreading agent may be coated.

EXAMPLES

Then, the present invention will be explained in further detail by way of examples, but the present invention is not limited to them.

<Absorbance Ratio>

The absorbance ratios (A2920 cm$^{-1}$/A1376 cm$^{-1}$, A720 cm$^{-1}$/A1376 cm$^{-1}$) of resin particles are measured with the outline of the following.

Regarding randomly selected 10 respective resin particles, surface analysis is performed by an infrared spectroscopic ATR measuring method to obtain an infrared absorption spectrum.

By this analysis, an infrared absorption spectrum in the range of from a sample surface to the depth of up to a few $\mu$m (about 2 $\mu$m) is obtained.

From respective infrared absorption spectra, the absorbance ratios (A2920 cm$^{-1}$/A1376 cm$^{-1}$, A720 cm$^{-1}$/A1376 cm$^{-1}$) are calculated. Absorbances A2920 cm$^{-1}$, A1376 cm$^{-1}$, and A720 cm$^{-1}$ are measured by connecting "Smart-iTR" as an ATR accessory manufactured by Thermo SCIENTIFIC to a measurement device which is sold from Thermo SCIENTIFIC under a product name "Fourier Transformation Infrared Spectrophotometer Nicolet iS10". ATR-FTIR measurement is performed under the following conditions.

<Measurement Conditions>

- Measurement device: Fourier Transformation Infrared Spectrophotometer Nicolet iS10 (manufactured by Thermo SCIENTIFIC) and
  One time reflection-type horizontal ATR Smart-iTR (manufactured by Thermo SCIENTIFIC)
- ATR Crystal: Diamond with ZnSe lens, angle = 42°
- Measurement method: One time ATR method
- Measurement wave number region: 4000 cm$^{-1}$ to 650 cm$^{-1}$
- Wave number dependency of measurement depth: not corrected
- Detector: Deuterated triglycine sulfate (DTGS) detector and KBr beam splitter
- Resolution: 4 cm$^{-1}$
- Integration times: 16 times (this also applies at measurement of background)

In the ATR method, since intensity of an infrared absorption spectrum obtained in measurement is changed by the degree of attachment between a sample and a high refractivity crystal, a maximum load which can be applied by "Smart-iTR" as the ATR accessory is applied to approximately uniformize the degree of attachment, and thereafter, measurement is performed.

Infrared absorption spectrum obtained under the above conditions is peak-treated as described below to obtain A2920 cm$^{-1}$, A1376 cm$^{-1}$, and A720 cm$^{-1}$ of each of them. The absorbance A2920 cm$^{-1}$ at 2920 cm$^{-1}$ obtained from an infrared absorption spectrum is the absorbance corresponding to an absorption spectrum derived from C-H stretching vibration of a methylene group contained in a polymethylene chain in the olefin-based elastomer. In measurement of this absorbance, even when other absorption spectrums are overlapped at 2920 cm$^{-1}$, peak separations are not conducted. The absorbance A2920 cm$^{-1}$ means the maximum absorbance between 3080 cm$^{-1}$ and 2750 cm$^{-1}$, with a straight line connecting 3080 cm$^{-1}$ and 2750 cm$^{-1}$ being a baseline.

Additionally, the absorbance A1376 cm$^{-1}$ at 1376 cm$^{-1}$ is the absorbance corresponding to an absorption spectrum derived from CH3 symmetric bending vibration of a -C-CH$_3$ moiety contained in the olefin-based elastomer. In measurement of this absorbance, even when other absorption spectrums are overlapped at 1376 cm$^{-1}$, peak separations are not conducted. The absorbance A1376 cm$^{-1}$ means the maximum absorbance between 1405 cm$^{-1}$ and 1315 cm$^{-1}$, with a straight line connecting 1405 cm$^{-1}$ and 1315 cm$^{-1}$ being a baseline. Additionally, the absorbance A720 cm$^{-1}$ at 720 cm$^{-1}$ is the absorbance corresponding to an absorption spectrum derived from skeleton vibration of a polymethylene chain in the olefin-based elastomer. In measurement of this absorbance, even when other absorption spectrums are overlapped at 720 cm$^{-1}$, peak separations are not conducted. The absorbance A720 cm$^{-1}$ means the maximum absorbance between 777 cm$^{-1}$ and 680 cm$^{-1}$, with a straight line connecting 777 cm$^{-1}$ and 680 cm$^{-1}$ being a baseline.

<Crystallization Temperature>

A crystallization temperature of the non-crosslinked polyolefin-based elastomer is measured by the method described in JIS K7121: 2012 "Testing Methods for Transition Temperatures of Plastics". Provided that a sampling method and temperature conditions are performed as follows. Using a differential scanning calorimeter Model DSC6220 (manufactured by SII Nano Technology Inc.), about 6 mg of a sample is filled on a bottom of a measurement container made of aluminum without gaps. A DSC curve when under a nitrogen gas flow rate of 20 mL/min, a temperature is lowered from 30°C to -40°C, and is held for 10 minutes, a temperature is raised from -40°C to 220°C (1st Heating), and held for 10 minutes, a temperature is lowered from 220°C to -40°C (Cooling), and held for 10 minutes, and a temperature is raised from -40°C to 220°C (2nd Heating) is obtained. In addition, all temperature rising and temperature lowering are performed at a rate of 10°C/min, and as a standard substance, alumina is used.

In the present invention, a crystallization temperature is a value obtained by reading a temperature of a top of a crystallization peak on a highest temperature side, which is seen during Cooling process, using analysis software attached to the device.

<Melting Point>

A melting point of the non-crosslinked polyolefin-based elastomer is measured by the method described in JIS K7121:2012 "Testing Methods for Transition Temperatures of Plastics". Provided that a sampling method and temperature conditions are performed as follows.

Using a differential scanning calorimeter Model DSC6220 (manufactured by SII Nano Technology Inc.), about 6 mg of a sample is filled on a bottom of a measurement container made of aluminum without gaps. A DSC curve when under a nitrogen gas flow rate of 20 mL/min, a temperature is lowered from 30°C to -40°C, and held for 10 minutes, a temperature is raised from -40°C to 220°C (1st Heating), and held for 10 minutes, a temperature is lowered from 220°C to -40°C (Cooling), and held for 10 minutes, and a temperature is raised from -40°C to 220°C (2nd Heating) is obtained. In addition, all temperature rising and temperature lowering are performed at a rate of 10°C/min, and as a standard substance, alumina is used. In the present invention, a melting point is a value obtained by reading a temperature of a top of a melting peak on a highest temperature side, which is seen during 2nd Heating process, using analysis software attached to the device.

<Shore A Hardness>

The Shore A hardness is measured in accordance with a durometer hardness test (JIS K6253:97).

<Bulk Density of Expanded Particles>

First, Wg of expanded particles are collected as a measurement sample, this measurement sample is naturally dropped into a measuring cylinder, thereafter, a bottom of the measuring cylinder is tapped to adjust an apparent volume (V) cm$^3$ of the sample to be constant, a mass and a volume thereof are measured, and the bulk density of the expanded particles is measured based on the following equation.

Bulk density (g/cm$^3$) = mass of measurement sample (W)/volume of measurement sample (V)

<Average Particle Diameter of Expanded Particles>

About 50 g of expanded particles are classified with JIS standard sieves of sieve openings of 16.00 mm, 13.20 mm, 11.20 mm, 9.50 mm, 8.00 mm, 6.70 mm, 5.60 mm, 4.75 mm, 4.00 mm, 3.35 mm, 2.80 mm, 2.50 mm, 2.36 mm, 2.00 mm, 1.70 mm, 1.40 mm, 1.18 mm, and 1.00 mm for 5 minutes using a Ro-Tap type sieve shaker (manufactured by SIEVE FACTORY IIDA CO., LTD). A mass of the sample on a sieve net is measured, and based on an accumulated mass distribution curve obtained from the result, a particle diameter at which an accumulated mass becomes 50% (median diameter) is defined as an average particle diameter.

<Compression Set (Recoverability)>

The compression set was measured in accordance with a compression set test (JIS K6767:1999).

Specifically, a rectangular parallelepiped test piece of length 50 mm × width 50 mm × thickness 25 mm which has been cut out from an expanded molded article is retained in the 25% compressed state for 22 hours under the standard atmosphere of JIS K 7100: 1999, Symbol "23/50" (temperature 23°C, relative humidity 50%), Class 2, using a compression set measurement plate (manufactured by KOBUNSHI KEIKI CO., LTD.), the thickness of the test piece after 24 hours from compression release is measured, and the compression set (CS (%)) is measured by the following equation.

$$\text{Compression set rate CS (\%)} = \{(t0 - t1)/t0 \times 100\}$$

t0: Original thickness of test piece (mm)
t1: Thickness after test piece was taken out from compression device and 24 hours past (mm)

<Surface Hardness>

Using a durometer (type C) manufactured by KOBUNSHI KEIKI CO., LTD., the surface hardness of an expanded molded article is measured. Measurement of the surface hardness is performed on one expanded particle surface, by avoiding a region near a fusion part of expanded particles. The surface hardness is an average value of measured values of five points. In the present specification, the surface hardness is used as an index of flexibility.

<Compressive Stress>

The compressive stress was measured by the method described in JIS K7220:2006 "Rigid Cellular Plastics-Determination of Compression Properties". That is, the compressive strength (compressive elasticity modulus, compressive stress at 5 percent deformation, compressive stress at 10 percent deformation, compressive stress at 25 percent deformation, compressive stress at 50 percent deformation) was measured at the test specimen size of cross section 50 mm $\times$ 50 mm $\times$ thickness 25 mm and a compression speed of 2.5 mm/min, with the displacement origin being an intersection of compressive elasticity modulus, using a tensilon universal testing machine UCT-10T (manufactured by Orientec Co., Ltd.) and universal testing machine data processing (UTPS-237 manufactured by Softbrain Co., Ltd.). The number of test pieces was minimally 5, the test pieces were conditioned over 16 hours under the standard atmosphere of JIS K 7100: 1999, Symbol "23/50" (temperature 23°C, relative humidity 50%), Class 2, and measurement was performed under the same standard atmosphere.

(Compressive Strength)

The compressive strength is calculated by the following equation.

$$\sigma_m = F_m/A_0 \times 10^3$$

$\sigma_m$: Compressive strength (kPa)
$F_m$: Maximum force at which deformation arrived at within deformation ratio of 10% (N)
$A_0$: Initial cross-sectional area of test piece (mm$^2$)

(5% (10%, 25%, 50%) Deformation Compressive Stress)

The 5% deformation compressive stress is calculated by the following equation.

$$\sigma_{5(10, 25, 50)} = F_{5(10, 25, 50)}/A0 \times 10^3$$

$\sigma_{5(10,25,50)}$: 5% (10%, 25%, 50%) deformation compressive stress (kPa)
$F_{5(10,25,50)}$: Force at 5% (10%, 25%, 50%) deformation (N)
$A_0$: Initial cross-sectional area of test piece (mm$^2$)

• Conditions of 10%, 25%, and 50% are given in parenthesis

(Compressive Elasticity Modulus)

The compressive elasticity modulus is calculated by the following equation using an initial straight line portion of a load-strain curve.

$$E = \Delta\sigma/\Delta\varepsilon$$

E: Compressive elasticity modulus (kPa)

$\Delta\sigma$: Difference in stress between two points on straight line (kPa)

$\Delta\varepsilon$: Difference in deformation between the same two points (%)

Example 1

(1) Impregnation Step

Resin particles (average particle diameter 5 mm, Shore A hardness 78) of TPO R110E (manufactured by Prime Polymer Co., Ltd.) which is a thermoplastic olefin-based elastomer were sealed in a pressure container of a volume of 5 L, and a carbonic acid gas was fed under pressure until a manometer showed 4.0 MPa. Thereafter, the container was allowed to stand under the environment of a temperature of 20°C for 48 hours, and a carbonic acid gas was impregnated into the resin particles of the olefin-based thermoplastic elastomer. By the above-described method, a gas amount of a carbonic acid gas which had been impregnated into the olefin-based thermoplastic elastomer was 4.53% by mass.

(2) Expansion Step

The resulting resin particles were placed into an expanding machine which had been pre-heated to 105 to 108°C with the water steam, and heated at 105 to 108°C for 10 seconds while stirring, thereby, expanded particles were obtained.

(3) Molding Step

The resulting expanded particles were sealed in a pressure container, and a nitrogen gas was fed under pressure until a manometer showed 2.0 MPa. The pressure container was allowed to stand at room temperature for 24 hours to impregnate a nitrogen gas into the expanded particles. The expanded particles impregnated with a nitrogen gas were filled into a molding cavity of 30 mm $\times$ 300 mm $\times$ 400 mm, heated with the water steam at 0.14 MPa for 34 seconds, and then, cooled until a surface pressure of an expanded molded article became 0.01 MPa or less, thereby, an expanded molded article was obtained.

Example 2

An expanded molded article was obtained in the same manner as in Example 1, except that the heating time at the expansion step was changed to 25 seconds, and the heating time at the molding step was changed to 22 seconds.

Example 3

(4) Two Times Expansion Step

The expanded particles obtained in the expansion step were sealed in a pressure container, and a nitrogen gas was fed under pressure until a manometer showed 2.0 MPa. The pressure container was allowed to stand at room temperature for 24 hours to impregnate a nitrogen gas into the expanded particles. The expanded particles impregnated with a nitrogen gas were placed into an expanding machine which had been pre-heated at 105 to 108°C with the water steam, and heated at 105 to 108°C for 10 seconds while stirring, thereby, two times expanded particles were obtained.

An expanded molded article was obtained in the same manner as in Example 2, except that a two times expansion step was performed before the molding step.

Example 4

An expanded molded article was obtained in the same manner as in Example 1, except that resin particles having an average particle diameter of 1.6 mm, which had been obtained by melt-kneading the olefin-based elastomer resin using an extruder, and then, performing granulation by extrusion and underwater cutting, were used, the heating time at the expansion step was changed to 8 seconds, the water steam pressure at the molding step was changed to 0.10 MPa, and the heating time at the molding step was changed to 30 seconds.

Example 5

An expanded molded article was obtained in the same manner as in Example 1, except that resin particles having an average particle diameter of 1.6 mm, which had been obtained by melt-kneading the olefin-based elastomer resin using an extruder, and then, performing granulation by extrusion and underwater cutting, were used, the heating time at the expansion step was changed to 15 seconds, the water steam pressure at the molding step was changed to 0.10 MPa, and the heating time at the molding step was changed to 30 seconds.

Example 6

An expanded molded article was obtained in the same manner as in Example 1, except that resin particles having an average particle diameter of 1.6 mm, which had been obtained by melt-kneading the olefin-based elastomer resin using an extruder, and then, performing granulation by extrusion and underwater cutting, were used, the heating temperature at the expansion step was changed to 110 to 115°C, the heating time at the expansion step was changed to 15 seconds, the water steam pressure at the molding step was changed to 0.10 MPa, and the heating time at the molding step was changed to 30 seconds.

Example 7

Using resin particles having an average particle diameter of 1.3 mm, which had been obtained by melt-kneading TPO R110E (manufactured by Prime Polymer Co., Ltd.) being an olefin-based elastomer using an extruder, and then, performing granulation by extrusion and underwater cutting, the heating temperature at an expansion step was set to be 110 to 115°C, and the heating time was set be 15 seconds, thereby, expanded particles were obtained. In a two times expansion step, the resulting expanded particles were sealed in a pressure container, and a nitrogen gas was fed under pressure until a manometer showed 2.0 MPa. The pressure container was allowed to stand at room temperature for 24 hours to impregnate a nitrogen gas into the expanded particles. The expanded particles impregnated with a nitrogen gas were placed into an expanding machine which had been pre-heated at 105 to 108°C with the water steam, and heated at 105 to 108°C for 10 seconds while stirring, thereby, two times expanded particles were obtained. The resulting two times expanded particles were sealed in a pressure container, and a nitrogen gas was fed under pressure until a manometer showed 2.0 MPa. The pressure container was allowed to stand at room temperature for 24 hours to impregnate a nitrogen gas into the expanded particles. The expanded particles impregnated with a nitrogen gas were filled into a molding cavity of 30 mm× 300 mm× 400 mm, heated with the water steam at 0.1 MPa for 30 seconds, and then, cooled until a surface pressure of an expanded molded article became 0.01 MPa or less, thereby, an expanded molded article was obtained.

Example 8

An expanded molded article was obtained in the same manner as in Example 7, except that, in the two times expansion step, a nitrogen gas was fed into the pressure container under pressure until a manometer showed 3.0 MPa.

Example 9

An expanded molded article was obtained in the same manner as in Example 1, except that resin particles (average particle diameter 5 mm, Shore D hardness 35) of TPO T310E (manufactured by Prime Polymer Co., Ltd.) which is a thermoplastic olefin-based elastomer were used.

Example 10

An expanded molded article was obtained in the same manner as in Example 1, except that resin particles (average particle diameter 5 mm, Shore D hardness 35) of TPO T310E (manufactured by Prime Polymer Co., Ltd.) which is a thermoplastic olefin-based elastomer were used, the heating temperature at the expansion step was changed to 115 to 120°C, and the heating time at the expansion step was changed to 30 seconds.

Example 11

An expanded molded article was obtained in the same manner as in Example 3, except that resin particles (average particle diameter 5 mm, Shore D hardness 35) of TPO T310E (manufactured by Prime Polymer Co., Ltd.) which is a thermoplastic olefin-based elastomer were used, the heating temperature at the expansion step was changed to 115 to 120°C, and the heating time at the expansion step was changed to 30 seconds.

Example 12

An expanded molded article was obtained in the same manner as in Example 1, except that resin particles (average particle diameter 5 mm, Shore A hardness 75) of TPO M142E (manufactured by Prime Polymer Co., Ltd.) which is a thermoplastic olefin-based elastomer were used.

Example 13

An expanded molded article was obtained in the same manner as in Example 1, except that resin particles (average particle diameter 5 mm, Shore A hardness 75) of TPO M142E (manufactured by Prime Polymer Co., Ltd.) which is a thermoplastic olefin-based elastomer were used, the heating temperature at the expansion step was changed to 110 to 115°C, and the heating time at the expansion step was changed to 20 seconds.

Example 14

An expanded molded article was obtained in the same manner as in Example 3, except that resin particles (average particle diameter 5 mm, Shore A hardness 75) of TPO M142E (manufactured by Prime Polymer Co., Ltd.) which is a thermoplastic olefin-based elastomer were used.

Example 15

An expanded molded article was obtained in the same manner as in Example 1, except that resin particles (average particle diameter 5 mm, Shore A hardness 68) of TPO R110MP (manufactured by Prime Polymer Co., Ltd.) which is a thermoplastic olefin-based elastomer were used.

Comparative Example 1

An expanded molded article was obtained in the same manner as in Example 7, except that resin particles (average particle diameter 5 mm, Shore A hardness 78) of TPO R110E (manufactured by Prime Polymer Co., Ltd.) which is a thermoplastic olefin-based elastomer were used, and in the two times expansion step, a nitrogen gas was fed into the pressure container under pressure until a manometer showed 4.0 MPa.

Comparative Example 2

Expansion was performed in the same manner as in Example 1, except that resin particles (average particle diameter 5 mm) of E200GP (manufactured by Prime Polymer Co., Ltd.) which is a non-elastomer thermoplastic polypropylene resin were used, but a good sample was not obtained.

Comparative Example 3

Expansion was performed in the same manner as in Example 1, except that resin particles (average particle diameter 5 mm) of Novatec LC600A (manufactured by Japan Polypropylene Corporation) which is a non-elastomer thermoplastic polyethylene resin were used, but a good sample was not obtained.

[Table 1]

| | Unit | Example | | | | | | | | | | | | | | | Comparative Example | | |
|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 1 | 2 | 3 |
| Resin Species | | R110E | R110E | R110E | R110E | R110E | R110E | R110E | R110E | T310E | T310E | T310E | M142E | M142E | M142E | R110MP | R110E | E200GP | Novatec LC600A |
| Density of expanded particles | g/cm³ | 0.078 | 0.045 | 0.030 | 0.120 | 0.088 | 0.065 | 0.025 | 0.018 | 0.13 | 0.064 | 0.044 | 0.088 | 0.058 | 0.025 | 0.078 | 0.012 | × | × |
| Average particle diameter of expanded particles | mm | 6.7 | 8.0 | 9.5 | 2.0 | 2.36 | 3.3 | 4.0 | 4.75 | 5.6 | 6.7 | 8.0 | 6.7 | 8.0 | 9.5 | 6.7 | 4.75 | × | × |
| Density of expanded molded article | g/cm³ | 0.085 | 0.056 | 0.045 | 0.138 | 0.103 | 0.076 | 0.039 | 0.030 | 0.15 | 0.076 | 0.058 | 0.1 | 0.071 | 0.03 | 0.091 | 0.015 | × | × |
| Compression set | % | 3.5 | 4.4 | 4.8 | 3 | 1.5 | 2.2 | 14 | 14 | 2.1 | 6.0 | 8.0 | 5.6 | 6.0 | 19 | 10 | 27 | × | × |
| Surface hardness | | 28 | 18 | 15 | 40 | 34 | 25 | 10 | 8 | 60 | 35 | 28 | 35 | 20 | 8 | 20 | 5 | × | × |
| Melting point | °C | 154 | 154 | 154 | 154 | 154 | 154 | 154 | 154 | 154 | 154 | 154 | 152 | 152 | 152 | 155 | 154 | 160 | 106 |
| Crystallization temperature | °C | 100 | 100 | 100 | 100 | 100 | 100 | 100 | 100 | 97 | 97 | 97 | 97 | 97 | 123 | 95 | 100 | 109 | 97 |
| Absorbance ratio A2920 cm⁻¹/A1376 cm⁻¹ | | 1.86 | 1.86 | 1.86 | 1.86 | 1.86 | 1.86 | 1.86 | 1.86 | 1.75 | 1.75 | 1.75 | 1.89 | 1.89 | 1.89 | 2.07 | 1.86 | 1.15 | 32.1 |
| Compressive stress 25% | MPa | 0.09 | 0.05 | 0.04 | 0.11 | 0.08 | 0.06 | 0.03 | 0.02 | 0.21 | 0.08 | 0.06 | 0.07 | 0.05 | 0.03 | 0.04 | × | × | × |
| Compressive stress 50% | MPa | 0.17 | 0.12 | 0.10 | 0.23 | 0.17 | 0.13 | 0.07 | 0.07 | 0.39 | 0.16 | 0.12 | 0.16 | 0.11 | 0.08 | 0.11 | × | × | × |

From Examples 1 to 15 and Comparative Examples 1 to 3, it is seen that an expanded molded article excellent in flexibility and recoverability can be provided, by that an expanded molded article is composed of a fused body of expanded particles including a non-crosslinked olefin-based elastomer and not including a mineral oil, and has the density of 0.015 to 0.5 g/cm$^3$ and the compression set of 25% or less.

(Analysis of Resins Used in Examples and Comparative Examples)

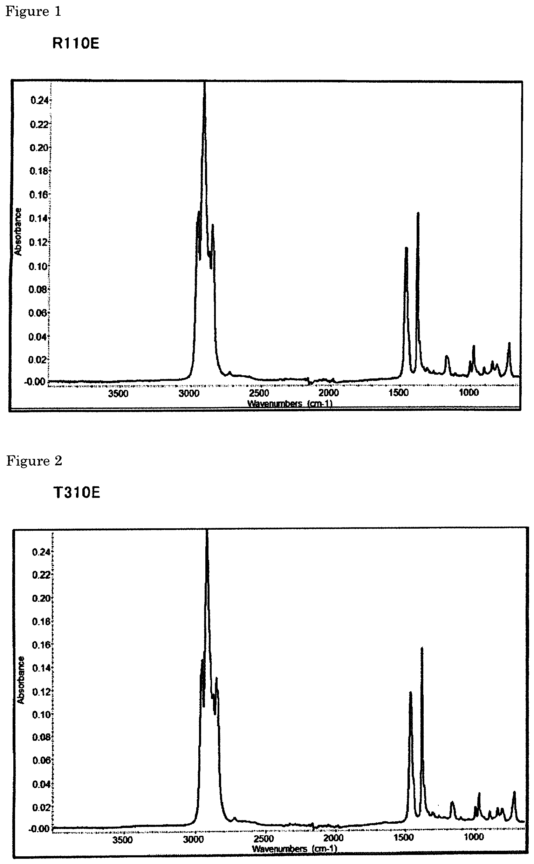

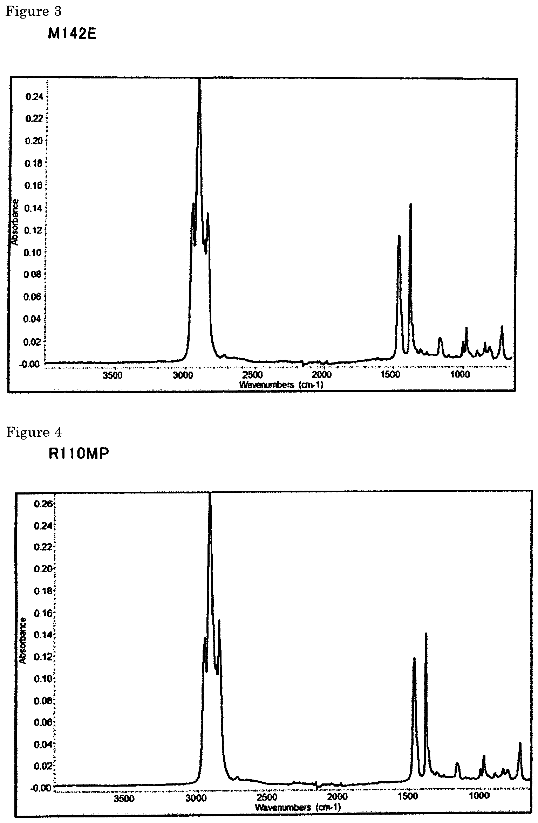

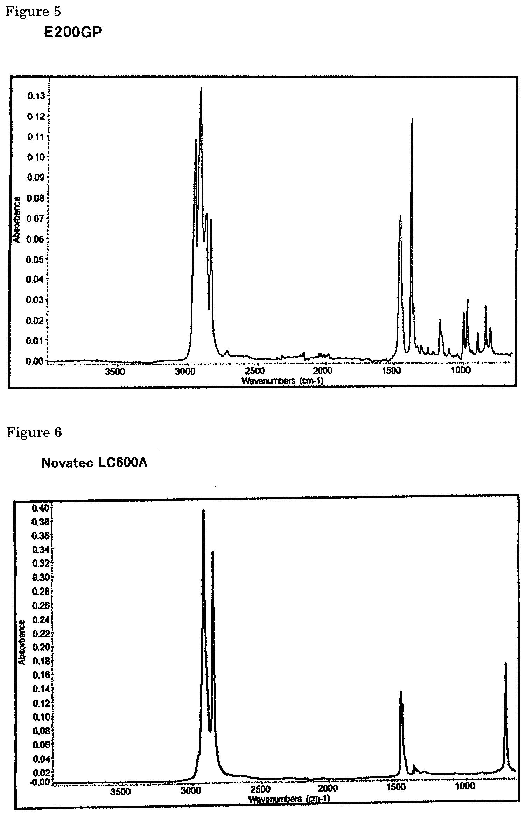

FT-IR charts of six kinds of resins used in examples and comparative examples are shown in Figs. 1 to 6. Values of A2920 cm$^{-1}$/A1376 cm$^{-1}$ and A720 cm$^{-1}$/A1376 cm$^{-1}$ which were calculated from the resulting charts are shown in Table 2.

[Table 2]

| Resin species | | R110E | T310E | M142E | R110MP | E200GP | Novatec LC600A |
|---|---|---|---|---|---|---|---|
| Peak height ratio | A2920 cm$^{-1}$/ A1376 cm$^{-1}$ | 1.86 | 1.75 | 1.89 | 2.07 | 1.15 | 32.1 |
| | A720 cm$^{-1}$/ A1376 cm$^{-1}$ | 0.209 | 0.176 | 0.212 | 0.262 | 0 | 12.7 |

## Claims

1. An expanded molded article comprising a fused body of expanded particles consisting of a non-crosslinked olefin-based elastomer and not including a mineral oil, the expanded molded article having a density of 0.015 to 0.5 g/cm$^3$ and a compression set of 25% or less;
   wherein said non-crosslinked olefin-based elastomer is an elastomer in which an absorption ratio (A2920 cm$^{-1}$/A1376 cm$^{-1}$) of a maximum peak in a range of 2920 $\pm$ 20 cm$^{-1}$ (A2920 cm$^{-1}$) and a maximum peak in a range of 1376 $\pm$ 20 cm$^{-1}$ (A1376 cm$^{-1}$), obtained in FT-IR measurement, is in a range of 1.20 to 10;
   wherein the compression set was measured in accordance with the section "Compression Set" of the specification; and
   wherein the absorption ratio was measured in accordance with the section "Absorbance Ratio" of the specification.

2. The expanded molded article according to claim 1, wherein said non-crosslinked olefin-based elastomer is an elastomer in which an absorbance ratio (A720 cm$^{-1}$/A1376 cm$^{-1}$) of a maximum peak in a range of 1376 $\pm$ 20 cm$^{-1}$ (A1376 cm$^{-1}$) and a maximum peak in a range of 720 $\pm$ 20 cm$^{-1}$ (A720 cm$^{-1}$), obtained in FT-IR measurement, is in a range of 0.02 to 0.5;
   wherein the absorption ratio was measured in accordance with the section "Absorbance Ratio" of the specification.

3. The expanded molded article according to claim 1, wherein said expanded molded article has a surface hardness (C) of 5 to 70;
   wherein the surface hardness was measured in accordance with the section "Surface Hardness" of the specification.

## Patentansprüche

1. Expandierter Formartikel, der einen Schmelzkörper aus expandierten Teilchen, die aus einem nicht-vernetzten Elastomer auf Olefinbasis bestehen und kein Mineralöl einschließen, umfasst, wobei der expandierte Formartikel eine Dichte von 0,015 bis 0,5 g/cm$^3$ und einen Druckverformungsrest von 25% oder weniger aufweist;
   wobei das nicht-vernetzte Elastomer auf Olefinbasis ein Elastomer ist, in dem ein Adsorptionsverhältnis (A2920 cm$^{-1}$/A1376 cm$^{-1}$) eines Maximalpeaks im Bereich von 2920 $\pm$ 20 cm$^{-1}$ (A2920 cm$^{-1}$) und eines Maximalpeaks im Bereich von 1376 $\pm$ 20 cm$^{-1}$ (A1376 cm$^{-1}$), erhalten durch FT-IR Messung, im Bereich von 1,20 bis 10 liegt;
   wobei der Druckverformungsrest gemäß dem Abschnitt "Compression Set" der Beschreibung gemessen wurde; und
   wobei das Adsorptionsverhältnis gemäß dem Abschnitt "Adsorbance Ratio" der Beschreibung gemessen wurde.

2. Expandierter Formartikel gemäß Anspruch 1, wobei das nicht-vernetzte Elastomer auf Olefinbasis ein Elastomer ist, in dem ein Adsorptionsverhältnis (A720 cm$^{-1}$/A1376 cm$^{-1}$) eines Maximalpeaks im Bereich von 1376 $\pm$ 20 cm$^{-1}$ (A1376 cm$^{-1}$) und eines Maximalpeaks im Bereich von 720 $\pm$ 20 cm$^{-1}$ (A720 cm$^{-1}$), erhalten durch FT-IR Messung, im Bereich von 0,02 bis 0,5 liegt;
   wobei das Adsorptionsverhältnis gemäß dem Abschnitt "Adsorbance Ratio" der Beschreibung gemessen wurde.

3. Expandierter Formartikel gemäß Anspruch 1, wobei der expandierte Formartikel eine Oberflächenhärte (C) von 5 bis 70 aufweist;
wobei die Oberflächenhärte gemäß dem Abschnitt "Surface Hardness" der Beschreibung gemessen wurde.

## Revendications

1. Article moulé expansé comprenant un corps fusionné de particules expansées constituées d'un élastomère à base d'oléfine non réticulé et n'incluant pas une huile minérale, l'article moulé expansé présentant une masse volumique de 0,015 à 0,5 g/cm$^3$ et une compression rémanente de 25 % ou moins ;
dans lequel l'élastomère à base d'oléfine non réticulé est un élastomère dans lequel un rapport d'absorption (A2920 cm$^{-1}$/A1376 cm$^{-1}$) d'un pic maximal dans une plage de 2920 $\pm$ 20 cm$^{-1}$ (A2920 cm$^{-1}$) et d'un pic maximal dans une plage de 1376 $\pm$ 20 cm$^{-1}$ (A1376 cm$^{-1}$), obtenus dans une mesure FT-IR, est dans une plage allant de 1,20 à 10 ;
dans lequel la compression rémanente a été mesurée conformément à la section « Compression rémanente » du mémoire ; et
dans lequel le rapport d'absorption a été mesuré conformément à la section « Rapport d'absorbance » du mémoire.

2. Article moulé expansé selon la revendication 1, dans lequel ledit élastomère à base d'oléfine non réticulé est un élastomère dans lequel un rapport d'absorbance (A720 cm$^{-1}$/A1376 cm$^{-1}$) d'un pic maximal dans une plage de 1376 $\pm$ 20 cm$^{-1}$ (A1376 cm$^{-1}$) et d'un pic maximal dans une plage de 720 $\pm$ 20 cm$^{-1}$ (A720 cm$^{-1}$), obtenus dans une mesure FT-IR, est dans une plage allant de 0,02 à 0,5 ;
dans lequel le rapport d'absorption a été mesuré conformément à la section « Rapport d'absorbance » du mémoire.

3. Article moulé expansé selon la revendication 1, dans lequel ledit article moulé expansé présente une dureté de surface (C) de 5 à 70 ;
dans lequel la dureté de surface a été mesurée conformément à la section « Dureté de surface » du mémoire.

Figure 1

**R110E**

Figure 2

**T310E**

Figure 3

**M142E**

Figure 4

**R110MP**

Figure 5

**E200GP**

Figure 6

**Novatec LC600A**

**EP 3 202 833 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011132356 A
- JP 2000344924 A
- EP 1925635 A1
- EP 1486531 A1